# EUROPÄISCHE PATENTSCHRIFT

(11) **EP 3 807 509 B1**
(45) Veröffentlichungstag und Bekanntmachung des Hinweises auf die Patenterteilung: **03.01.2024**
(21) Anmeldenummer: 18735204.2
(22) Anmeldetag: 18.06.2018
(51) Int. Cl.: F02D 9/04, F02D 9/10, F16K 1/22, F16K 1/226

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF À VOLET POUR UN MOTEUR À COMBUSTION INTERNE

(43) Veröffentlichungstag der Anmeldung: 21.04.2021
(73) Patentinhaber: Pierburg GmbH, 41460 Neuss (DE)
(72) Erfinder: SOVVA, Elina, 40223 Düsseldorf (DE); CORBACH, Peter, 44795 Bochum (DE); ÖZCAN, Hasan, 41469 Neuss (DE)
(74) Vertreter: terpatent Patentanwälte ter Smitten Eberlein-Van Hoof Rütten Daubert
(86) Internationale Anmeldenummer: PCT/EP2018/066079
(87) Internationale Veröffentlichungsnummer: WO 2019/242833

(56) Entgegenhaltungen:
- EP-A2- 1 531 245
- EP-A2- 1 772 615
- DE-A1-102004 051 627
- DE-A1-102012 106 199
- DE-A1-102012 111 810
- US-A- 5 630 571

## Beschreibung

Die Erfindung betrifft eine Klappenvorrichtung für eine Verbrennungskraftmaschine mit einem Strömungsgehäuse, in dem ein durchströmbarer Kanal ausgebildet ist, einem Klappenkörper, der drehbar im Kanal angeordnet ist, einer Welle, auf der der Klappenkörper befestigt ist, Lagern, die in Lagerstellen des Strömungsgehäuses in den durchströmbaren Kanal ragend angeordnet sind und in denen die Welle drehbar gelagert ist.

Derartige Klappenvorrichtungen werden in Verbrennungskraftmaschinen insbesondere in Abgas oder Verbrennungsluft führenden Leitungen zur Regelung des Gasstroms verwendet. Dabei kann die Aktuierung der Welle und damit der Klappe sowohl elektromotorisch mit oder ohne nachgeschaltetes Getriebe oder auch pneumatisch oder hydraulisch erfolgen.

Vor allem beim Einsatz in thermisch belasteten Bereichen, wie dem Abgasstrang eines Verbrennungsmotors, entstehen durch die wechselnden Temperaturen unterschiedliche Wärmedehnungen der Bauteile, die aus unterschiedlichen Materialien hergestellt werden. Um ein Klemmen der Klappenkörper im Kanal oder zum Lager zu vermeiden, ist es daher erforderlich, entsprechende Abstände zur Kanalwand beziehungsweise zu den Lagern vorzusehen, was jedoch dazu führt, dass im geschlossenen Zustand häufig keine ausreichende Dichtigkeit erreicht wird.

Es wird daher in der DE 10 2012 111 810 A1 eine Klappenvorrichtung vorgeschlagen, bei der die Lager oder eine Anlaufscheibe zwischen dem Lager und dem Klappenkörper in den durchströmten Kanal hineinragt, um den Spalt zwischen dem Klappenkörper und der Kanalwand in dem Bereich in der Nähe der Welle besser zu schließen, ohne dass der Klappenkörper die Innenwand des Kanals bei Ausdehnung aufgrund von Wärmeeintrag berührt.

Des Weiteren ist aus der DE 195 00 344 A1 eine Klappenvorrichtung bekannt, bei der auf der Welle eine zusätzliche Dichtungsbuchse angeordnet wird, die in den Kanal ragt und zwischen dem Lager und dem Klappenkörper auf der Welle angeordnet wird. Diese Dichtungsbuchse weist einen Schlitz auf, in welchen der wellen nahe Klappenrand des Klappenkörpers ragt, so dass sich die Dichtungsbuchse mit dem Klappenkörper und der Welle dreht. Um dabei ein Verklemmen der Dichtungsbuchse im Bereich der Lagerstellen des Strömungsgehäuses zu verhindern und eine Leichtgängigkeit der Welle sicher zu stellen, muss eine große Toleranz vorgesehen werden, die zu Undichtigkeiten in Richtung der Lager führen kann.

Zusätzlich ist aus der DE 10 2004 051 627 Aleine Abgasklappeneinrichtung bekannt, bei der innerhalb des Gehäuses Anschlagelemente für den Klappenkörper vorgesehen sind. Diese können mit einem Lagerelement verbunden sein beziehungsweise einstückig mit einem Lagergehäuse oder einer Lagerhülse ausgebildet werden. Entsprechend weisen sie einen Abstand zur Welle auf.

Es stellt sich daher die Aufgabe, eine Klappenvorrichtung für eine Verbrennungskraftmaschine zu schaffen, welche auch bei großen Temperaturschwankungen im geschlossenen Zustand eine hohe Dichtigkeit aufweist und gleichzeitig mit möglichst wenigen Bauteilen größere Leckagen entlang der Welle zwischen dem Klappenkörper und dem Lager verhindert.

Diese Aufgabe wird durch eine Klappenvorrichtung mit den Merkmalen des Hauptanspruchs 1 gelöst. Weitere vorteilhafte Ausgestaltungen sind in den Unteransprüchen beschrieben.

Dadurch, dass jedes Lager zumindest einen sich über einen Teilumfang des jeweiligen Lagers erstreckenden Vorsprung aufweist, der axial in den Kanal über einen wellennahen Bereich eines äußeren Klappenrandes des Klappenkörpers ragt, und in Umfangsrichtung betrachtet außerhalb des vom Klappenkörper durchfahrbaren Bereiches angeordnet ist, wobei ein Spalt zwischen einer Innenwand des Strömungsgehäuses und dem Klappenkörper durch die Vorsprünge geschlossen ist, besteht die Möglichkeit die Leckagen im wellennahen Bereich der Klappenvorrichtung deutlich zu verringern, da der Spalt zwischen der Innenwand des Gehäuses beziehungsweise des Lagers und dem Klappenkörper durch die Vorsprünge vollständig verdeckt werden kann, ohne dass bei auftretenden Dehnungen des Klappenkörpers ein Verklemmen der Klappe im Kanal zu befürchten ist. Unter wellennahem Bereich wird in diesem Zusammenhang der Bereich des Klappenkörpers verstanden, der die Welle umgibt und am äußeren Umfang angeordnet ist, also den Lagerstellen gegenüberliegend angeordnet ist. Unter dem durchfahrbaren Bereich wird der Drehwinkelbereich bezüglich der Wellenachse verstanden, der bei Drehung der Klappe vom Klappenkörper überstrichen wird. Dies sind üblicherweise maximal 90° für jede Klappenhälfte, so dass ein gesamter durchfahrener Bereich von 180° entsteht, der sich jedoch aus zwei sich radial gegenüberliegenden Umfangsabschnitten zusammensetzt.

Somit ist es auch besonders vorteilhaft wenn jedes Lager zwei sich über einen Teilumfang des jeweiligen Lagers erstreckende Vorsprünge aufweist, die axial in den Kanal über den wellennahen Bereich des äußeren Klappenrandes des Klappenkörpers ragen, so dass radial beidseits der Welle ein Verschluss des Spaltes zwischen der Kanalinnenwand beziehungsweise dem Lager und dem Klappenkörper im geschlossenen Zustand hergestellt wird. So werden die vorhandenen Leckagen über die Klappe im den Kanal verschließenden Zustand der Klappe zusätzlich reduziert.

Dabei sind die beiden Vorsprünge vorzugsweise um 180° in Umfangsrichtung versetzt zueinander angeordnet, so dass exakt gegenüberliegende Bereiche an beiden Seiten der Welle abgedeckt werden.

In einer vorteilhaften Ausführungsform erstreckt sich jeder Vorsprung über 80° bis 90°, so dass der gesamte nicht durchfahrene Bereich verdeckt wird und bei einer Projektion entlang der Kanalachse beinahe der gesamte sonst vorhandene Spaltquerschnitt durch die beiden Vorsprünge verschlossen wird.

In einer weiteren vorteilhaften Ausgestaltung der Erfindung entspricht eine zwischen den Vorsprüngen ausgebildete Freifläche bezüglich ihrer Erstreckung in Umfangsrichtung dem maximalen Drehwinkel des Klappenkörpers. Entsprechend können die Vorsprünge als direkte Anschlagflächen für den Klappenkörper genutzt werden.

Entsprechend liegt der Klappenkörper in seiner den Kanal verschließenden Position gegen ein in Umfangsrichtung zum Klappenkörper weisendes erstes Ende jeden Vorsprungs an, so dass die Lager gleichzeitig als Anschlag dienen. Auf zusätzliche Anschläge am Gehäuse oder im Aktor zur Begrenzung des Drehwinkels kann auf diese Weise verzichtet werden.

Auch liegt der Klappenkörper vorteilhafterweise in seiner den Kanal freigebenden Position gegen ein in Umfangsrichtung zum Klappenkörper weisendes zweites Ende jeden Vorsprungs an. Somit ist auch die Freigabeposition des Klappenkörpers eindeutig definiert ohne weitere Bauteile oder Anschläge vorsehen zu müssen.

Um einen flächigen Anschlag des Klappenkörpers zu dessen Entlastung herzustellen, erstreckt sich die Fläche des jeweils zweiten Endes jeden Vorsprungs parallel zur Mittelachse des Kanals und ist in Öffnungsrichtung passend zur Klappendicke, insbesondere um eine halbe Klappendicke versetzt zur Mittelachse des Kanals angeordnet. Dies bedeutet, dass der Klappenkörper in seiner zur Kanalachse parallelen Position gegen den Anschlag anliegt. Unter Klappendicke wird dabei die Ausdehnung des Klappenkörpers senkrecht zur Haupterstreckungsebene verstanden. Zusätzlich wird in Öffnungsposition eine stabile Lage des Klappenkörpers hergestellt und so ein Schwingen vermieden.

In ähnlicher Weise erstreckt sich die Fläche des ersten Endes jeden Vorsprungs senkrecht zur Mittelachse des Kanals und ist in Schließrichtung passend zur Klappendicke, insbesondere um eine halbe Klappendicke versetzt zur Mittelachse des Kanals angeordnet, so dass auch in dieser Position ein vollflächiger Anschlag am Vorsprungsende vorliegt. In dieser Position wird durch die Anlage sowohl eine stabile Lage hergestellt, als auch die Dichtwirkung entlang der Anlagefläche durch die größere Anlagefläche und den damit steigenden Strömungswiderstand noch einmal erhöht.

In einer hierzu alternativen bevorzugten Ausführungsform liegt der Klappenkörper im den Kanal verschließenden Zustand an Anschlagflächen an, die am Kanal ausgebildet sind, wobei die zum Klappenkörper weisenden ersten Enden der Vorsprünge um 1° bis 10° in Schließrichtung versetzt zum den Kanal verschließenden Klappenkörper angeordnet sind. So wird ein ungewolltes Anschlagen an den Anschlagflächen der Vorsprünge der Lager vor Erreichen des eigentlichen Anschlagpunktes verhindert und gleichzeitig eine große Überdeckung hergestellt, die zu einer guten Dichtwirkung führt.

Besonders geringe Leckagen über die Spalte zwischen Klappenkörper und Innenwand des Kanals werden erreicht, wenn die Freiflächen der Lager in den Lagerstellen an einer Innenwand des Kanals enden und die Vorsprünge in den Kanal ragen. So kann beispielsweise ein sonst runder oder elliptischer Klappenkörper in seinen wellennahen radial äußeren Bereichen gerade ausgeführt werden und sich entsprechend bei thermischer Belastung in Richtung der Lagerstellen dehnen, ohne dass ein Verklemmen zu befürchten ist, da die Freiflächen nicht in den Kanal ragen müssen und der Klappenkörper sich im Extremfall über die gesamte Erstreckungshöhe der Vorsprünge ausdehnen kann, ohne in Kontakt zu den Lagern zu gelangen.

Es wird somit eine Klappenvorrichtung geschaffen, bei der bei hoher zu erreichender Dichtigkeit entlang des Kanals bei geschlossenem Klappenkörper eine Leichtgängigkeit der Klappe auch bei auftretenden thermischen Dehnungen sichergestellt ist. Gleichzeitig wird ein Verklemmen des Klappenkörpers verhindert. Auch kann auf Anschläge im Aktor oder an den Kanalwänden verzichtet werden, so dass Bauteile und Bearbeitungsschritte eingespart werden. Dennoch werden stabile Endlagen des Klappenkörpers im Kanal sichergestellt.

Ein Ausführungsbeispiel einer erfindungsgemäßen Klappenvorrichtung für eine Verbrennungskraftmaschine ist in den Figuren dargestellt und wird nachfolgend beschrieben.

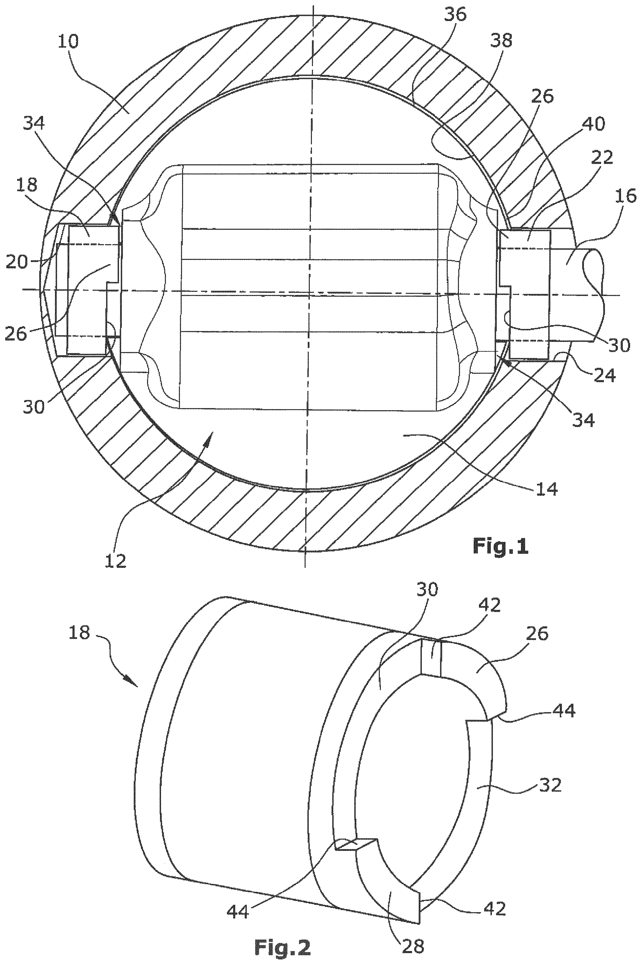

Figur 1 zeigt eine Draufsicht auf eine erfindungsgemäße Klappenvorrichtung entlang der Kanalachse.

Figur 2 zeigt eine dreidimensionale Darstellung eines Lagers der erfindungsgemäßen Klappenvorrichtung aus Figur 1.

Die erfindungsgemäße Klappenvorrichtung besteht aus einem Strömungsgehäuse 10, in dessen durchströmbaren Kanal 12 ein Klappenkörper 14 drehbar auf einer Welle 16 angeordnet ist. Durch Drehen der Welle 16 mittels eines nicht dargestellten insbesondere elektrischen Aktors wird der Klappenkörper 14 im Kanal 12 gedreht und so ein freier Durchströmungsquerschnitt zwischen einer den Kanal 12 vollständig verschließenden Position und einer den Kanal weitestgehend freigebenden Position geregelt.

Die Welle 16 ist in einem ersten Lager 18, welches in einer ersten Lagerstelle 20 am Strömungsgehäuse 10 angeordnet ist, und einem zweiten Lager 22 gelagert, welches in einer zweiten Lagerstelle 24 angeordnet ist, die an einer zur ersten Lagerstelle 20 bezüglich einer Mittelachse des Kanals 12 gegenüberliegenden Seite des Strömungsgehäuses 10 ausgebildet ist.

Beide Lager 18, 22 weisen an ihren zum Kanal 12 weisenden axialen Enden zwei sich über einen Teilumfang des jeweiligen Lagers 18, 22 erstreckende Vorsprünge 26, 28 und zwei zwischen den Vorsprüngen 26, 28 ausgebildete Freiflächen 30, 32 auf. Die zum Kanal 12 weisenden Oberflächen der Freiflächen 31, 32 ragen lediglich geringfügig in den Kanal 12 oder enden an der Innenwand des Kanals 12, während die Vorsprünge 26, 28 in den Kanal 12 hineinragen. Die beiden Vorsprünge 26, 28 und damit auch die beiden Freiflächen 30, 32 sind ungefähr um 180° versetzt zueinander angeordnet, so dass sich jeder Vorsprung und jede Freifläche in Umfangsrichtung über ungefähr 90° erstreckt. Dabei sollten die Vorsprünge 26, 28 und Freiflächen 30, 32 des ersten Lagers 18 exakt den Vorsprüngen 26, 28 und Freiflächen 30, 32 des zweiten Lagers 22 gegenüberliegen.

Der ansonsten im Wesentlichen runde oder ovale Klappenkörper 14 ist in seinem wellennahen Bereich 34 gerade ausgebildet und derart angeordnet, dass diese Gerade in den Bereich zwischen die Vorsprünge 26, 28 der beiden Lager 18, 22 ragt, und einen Spalt zu den Oberflächen der Freiflächen 30, 32 aufweist. Somit ragen die Vorsprünge 26, 28 über den wellennahen Bereich 34 des umfänglichen äußeren Klappenrandes 36 hinaus in den Kanal 12.

Bei Betrachtung des Kanals 12 entlang seiner Mittelachse bei sich in Schließposition befindendem Klappenkörper 14 wird so der durch die Gerade im wellennahmen Bereich 34 des Klappenkörpers zu einer Innenwand 38 des Strömungsgehäuses 10 entstehende Spalt 40 in der einen Kanalhälfte von dem einen Vorsprung 26 verdeckt und in der anderen Kanalhälfte vom anderen Vorsprung 28 verdeckt, so dass der Spalt 40 insgesamt geschlossen wird.

Dieser Aufbau hat auch zur Folge, dass ein bei Drehung des Klappenkörpers 14 durchfahrbarer Bereich lediglich durch die Freiflächen 30, 32 gebildet wird, also etwa eine 90° Drehung des Klappenkörpers 14 im Kanal 12 möglich ist.

Im vorliegenden Ausführungsbeispiel werden zusätzlich in Umfangsrichtung weisende Enden 42, 44 der Vorsprünge 26, 28 als Anschläge für den Klappenkörper 14 genutzt, so dass auf zusätzliche äußere Anschläge an der Innenwand 38 des Kanals 12 oder am Aktor verzichtet werden kann. Um dabei eine exakte 90° Drehung des Klappenkörpers zwischen der vollständig den Kanal freigebenden und verschließenden Position zu erreichen, ist das erste umfängliche Ende 42 des ersten Vorsprungs 26, gegen den der Klappenkörper 14 im geschlossenen Zustand anliegt, zu einer Wellenachse um eine halbe Klappendicke entlang der Mittelachse in Strömungsrichtung versetzt angeordnet, während das erste umfängliche Ende 42 des zweiten Vorsprungs 28 entlang der Mittelachse entgegen der Strömungsrichtung um eine halbe Klappendicke versetzt angeordnet ist, wobei beide Enden 42 senkrecht zur Mittelachse verlaufen und entsprechend in Schließdrehrichtung versetzt zur Wellenachse angeordnet sind. Die jeweiligen entgegengesetzten zweiten umfänglichen Enden 44 der Vorsprünge 26, 28 sind entsprechend in entgegengesetzte Richtungen parallel zur Mittelachse des Kanals 12 um eine halbe Klappendicke verschoben in Öffnungsdrehrichtung ausgebildet. Entsprechend erstrecken sich die Vorsprünge um etwas weniger als 90°, während die Freiflächen sich etwas weiter erstrecken. Bei Drehung des Klappenkörpers 14 im Kanal 12 entsteht somit ein durchfahrbarer Bereich von exakt 90° zwischen den Anschlagflächen, die durch die Enden 42, 44 der Vorsprünge 26, 28 der beiden Lager 18, 22 gebildet sind.

Alternativ können die Enden 42, 44 der Vorsprünge 26, 28 auch weiter versetzt in Umfangsrichtung ausgebildet werden und die Größe der Vorsprünge 26, 28 in Umfangsrichtung verringert werden, wobei darauf zu achten ist, dass bei Projektion entlang der Mittelachse des Kanals 12 die Vorsprünge 26, 28 dennoch vollständig den Spalt 40 zwischen dem äußeren Rand 36 des Klappenkörpers 14 und der Innenwand 38 des Strömungsgehäuses 10 verdecken. Bei dieser Ausführungsform können die Anschlagflächen am Strömungsgehäuse 10 oder am Aktor ausgebildet werden und die ersten Enden 42 der Vorsprünge 26, 28 in Schließrichtung um 1° bis 10° versetzt zum den Kanal 12 verschließenden Klappenkörper 14 angeordnet werden.

Selbstverständlich ist es auch möglich, den geschlossenen Zustand bei leicht schräg gestelltem Klappenkörper 14 auszubilden, wenn dieser beispielsweise oval geformt ist und der Kanal 12 rund ausgebildet ist. In diesem Fall verringert sich der durchfahrbare Bereich des Klappenkörpers 14 auf beispielsweise 80°, so dass in diesem Fall die Vorsprünge 26, 28 lediglich eine Erstreckung von etwa 80° im Umfangsrichtung aufweisen, während sich die Freiflächen 30, 32 über 100° erstrecken.

In all diesen Ausführungen kann der Klappenkörper sich entlang der Wellenachse im Vergleich zum umliegenden Strömungsgehäuse ausdehnen, ohne dass ein Klemmen des Klappenkörpers an der Innenwand des Kanals beziehungsweise des Lagers oder eine Schwergängigkeit des Klappenkörpers zu befürchten ist. Dennoch wird auch bei unterschiedlichen Dehnungen aufgrund thermischer Belastung eine hohe Dichtheit im wellennahen Bereich am Klappenkörper erreicht, da die vorhandenen Spalten durch die Vorsprünge verdeckt werden. Zusätzlich werden durch die Vorsprünge stabile Endlagen des Klappenkörpers hergestellt, wenn diese gleichzeitig als Anschlagflächen dienen.

Es sollte deutlich sein, dass die beanspruchte Erfindung nicht auf die beschriebenen Ausführungsbeispiele beschränkt ist, sondern verschiedene Modifikationen denkbar sind. Auch bestehen verschiedene Einsatzmöglichkeiten, wie die Verwendung als Abgasklappe als Abgasrückführklappe, Bypassklappe oder Drosselklappe. Auch können die Lager aus verschiedenen Materialien gefertigt sein.

## Patentansprüche

1. Klappenvorrichtung für eine Verbrennungskraftmaschine mit einem Strömungsgehäuse (10), in dem ein durchströmbarer Kanal (12) ausgebildet ist,
einem Klappenkörper (14), der drehbar im Kanal (12) angeordnet ist, einer Welle (16), auf der der Klappenkörper (14) befestigt ist, Lagern (18, 22), die in Lagerstellen (20, 24) des Strömungsgehäuses (10) in den durchströmbaren Kanal (12) ragend angeordnet sind und in denen die Welle (16) drehbar gelagert ist,
**dadurch gekennzeichnet, dass**
jedes Lager (18, 22) zumindest einen sich über einen Teilumfang des jeweiligen Lagers (18, 22) erstreckenden Vorsprung (26, 28) aufweist, der axial in den Kanal (12) über einen wellennahen Bereich (34) eines äußeren Klappenrandes (36) des Klappenkörpers (14) ragt und in Umfangsrichtung betrachtet außerhalb des vom Klappenkörper (14) durchfahrbaren Bereiches angeordnet ist, wobei ein Spalt (40) zwischen einer Innenwand (38) des Strömungsgehäuses (10) und dem Klappenkörper (14) durch die Vorsprünge (26, 28) geschlossen ist.

2. Klappenvorrichtung für eine Verbrennungskraftmaschine nach Anspruch 1,
**dadurch gekennzeichnet, dass**
jedes Lager (18, 22) zwei sich über einen Teilumfang des jeweiligen Lagers (18, 22) erstreckende Vorsprünge (26, 28) aufweist, die axial in den Kanal (12) über den wellennahen Bereich (34) des äußeren Klappenrandes (36) des Klappenkörpers (14) ragen.

3. Klappenvorrichtung für eine Verbrennungskraftmaschine nach Anspruch 2,
**dadurch gekennzeichnet, dass**
die beiden Vorsprünge (26, 28) um 180° in Umfangsrichtung versetzt zueinander angeordnet sind.

4. Klappenvorrichtung für eine Verbrennungskraftmaschine nach einem der vorhergehenden Ansprüche,
**dadurch gekennzeichnet, dass**
jeder Vorsprung (26, 28) sich über 80° bis 90° erstreckt.

5. Klappenvorrichtung für eine Verbrennungskraftmaschine nach einem der vorhergehenden Ansprüche,
**dadurch gekennzeichnet, dass**
eine zwischen den Vorsprüngen (26, 28) ausgebildete Freifläche (30, 32) bezüglich ihrer Erstreckung in Umfangsrichtung dem maximalen Drehwinkel des Klappenkörpers (14) entspricht.

6. Klappenvorrichtung für eine Verbrennungskraftmaschine nach einem der vorhergehenden Ansprüche,
**dadurch gekennzeichnet, dass**
der Klappenkörper (14) in seiner den Kanal (12) verschließenden Position gegen ein in Umfangsrichtung zum Klappenkörper (14) weisendes erstes Ende (42) jeden Vorsprungs (26, 28) anliegt.

7. Klappenvorrichtung für eine Verbrennungskraftmaschine nach einem der vorhergehenden Ansprüche,
**dadurch gekennzeichnet, dass**
der Klappenkörper (14) in seiner den Kanal (12) freigebenden Position gegen ein in Umfangsrichtung zum Klappenkörper (14) weisendes zweites Ende (44) jeden Vorsprungs (26, 28) anliegt.

8. Klappenvorrichtung für eine Verbrennungskraftmaschine nach einem der vorhergehenden Ansprüche,
**dadurch gekennzeichnet, dass**
die Fläche des jeweils zweiten Endes (44) jeden Vorsprungs (26, 28) sich parallel zur Mittelachse des Kanals (12) erstreckt und in Öffnungsrichtung passend zur Klappendicke um eine halbe Klappendicke versetzt zur Mittelachse des Kanals (12) angeordnet ist.

9. Klappenvorrichtung für eine Verbrennungskraftmaschine nach einem der vorhergehenden Ansprüche,
**dadurch gekennzeichnet, dass**
die Fläche des ersten Endes (42) jeden Vorsprungs (26, 28) sich senkrecht zur Mittelachse des Kanals (12) erstreckt und in Schließrichtung passend zur Klappendicke um eine halbe Klappendicke versetzt zur Mittelachse des Kanals (12) angeordnet ist.

10. Klappenvorrichtung für eine Verbrennungskraftmaschine nach einem der Ansprüche 1 bis 5,
**dadurch gekennzeichnet, dass**
der Klappenkörper (14) im den Kanal (12) verschließenden Zustand an Anschlagflächen anliegt, die am Kanal (12) ausgebildet sind, wobei die zum Klappenkörper (14) weisenden ersten Enden (42) der Vorsprünge (26, 28) um 1° bis 10° in Schließrichtung versetzt zum den Kanal (12) verschließenden Klappenkörper (14) angeordnet sind.

11. Klappenvorrichtung für eine Verbrennungskraftmaschine nach einem der vorhergehenden Ansprüche,
**dadurch gekennzeichnet, dass**
die Freiflächen (30, 32) der Lager (18, 22) in den Lagerstellen (20, 24) an einer Innenwand (38) des Kanals (12) enden und die Vorsprünge (26, 28) in den Kanal (12) ragen.

## Claims

1. Flap device for an internal combustion engine comprising a flow housing (10) in which a channel (12) through which a flow can pass is configured,
a flap body (14) which is arranged rotatably in the channel (12) a shaft (16) on which the flap body (14) is attached,
bearings (18, 22) which are arranged in bearing spaces (20, 24) of the flow housing (10) projecting into the duct (12) through which flow can take place and in which the shaft (16) is rotatably mounted,
**characterized in that**
each bearing (18, 22) comprises at least one projection (26, 28) which extends over a partial circumference of the respective bearing (18, 22), which projection projects axially into the channel (12) over a region (34) of an outer flap edge (36) of the flap body (14) close to the shaft and, viewed in the circumferential direction, is arranged outside the region through which the flap body (14) can pass, wherein a gap (40) between an inner wall (38) of the flow housing (10) and the flap body (14) is closed by the projections (26, 28).

2. Flap device for an internal combustion engine according to claim 1, **characterized in that**
each bearing (18, 22) comprises two projections (26, 28) which extend over a partial circumference of the respective bearing (18, 22) and project axially into the channel (12) over the region (34) of the outer flap edge (36) of the flap body (14) which is close to the shaft.

3. Flap device for an internal combustion engine according to claim 2, **characterized in that**
the two projections (26, 28) are arranged offset from one another by 180° in the circumferential direction.

4. Flap device for an internal combustion engine according to one of the preceding claims,
**characterized in that**
each projection (26, 28) extends over 80° to 90°.

5. Flap device for an internal combustion engine according to one of the preceding claims,
**characterized in that**
a clearance surface (30, 32) configured between the projections (26, 28) corresponds with respect to its extension in the circumferential direction to the maximum angle of rotation of the flap body (14).

6. Flap device for an internal combustion engine according to one of the preceding claims,
**characterized in that**
the flap body (14), in its position closing the channel (12), abuts against a first end (42) of each projection (26, 28) facing in the circumferential direction towards the flap body (14).

7. Flap device for an internal combustion engine according to one of the preceding claims,
**characterized in that**
the flap body (14), in its position opening the channel (12), abuts against a second end (44), facing in the circumferential direction towards the flap body (14), of each projection (26, 28).

8. Flap device for an internal combustion engine according to one of the preceding claims,
**characterized in that**
the surface of the respective second end (44) of each projection (26, 28) extends parallel to the central axis of the channel (12) and is arranged offset from the central axis of the channel (12) by half a flap thickness in the opening direction corresponding to the flap thickness.

9. Flap device for an internal combustion engine according to one of the preceding claims,
**characterized in that**
the surface of the first end (42) of each projection (26, 28) extends perpendicularly to the central axis of the channel (12) and is arranged offset from the central axis of the channel (12) by half a flap thickness in the closing direction corresponding to the flap thickness.

10. Flap device for an internal combustion engine according to any one of claims 1 to 5,
**characterized in that**
in the state closing the channel (12), the flap body (14) bears against stop surfaces which are configured on the channel (12), wherein the first ends (42) of the projections (26, 28) pointing towards the flap body (14) are arranged offset by 1° to 10° in the closing direction relative to the flap body (14) closing the channel (12).

11. Flap device for an internal combustion engine according to one of the preceding claims,
**characterized in that**
the clearance surfaces (30, 32) of the bearings (18, 22) in the bearing spaces (20, 24) end at an inner wall (38) of the channel (12) and the projections (26, 28) project into the channel (12).

## Revendications

1. Système de clapet pour un moteur à combustion interne avec un boîtier fluidique (10), dans lequel est formé un canal (12) apte à être traversé par le fluide, un corps de clapet (14), qui est disposé de manière rotative dans le canal (12), un arbre (16) sur lequel est fixé le corps de clapet (14), des paliers (18, 22) qui sont disposés dans des points de support (20, 24) du boîtier fluidique (10) en faisant saillie dans le canal (12) pouvant être traversé et dans lesquels l'arbre (16) est supporté de manière rotative,
**caractérisé en ce que**
chaque palier (18, 22) comprend au moins une projection (26, 28) s'étendant sur une partie de la périphérie du palier respectif (18, 22), qui fait saillie axialement dans le canal (12) sur une zone (34) proche de l'arbre d'un bord de clapet extérieur (36) du corps de clapet (14) et qui, vu dans la direction périphérique, est disposé à l'extérieur de la zone pouvant être traversée par le corps de clapet (14), un espace (40) entre une paroi intérieure (38) du boîtier fluidique (10) et le corps de clapet (14) étant fermé par les projections (26, 28).

2. Système de clapet pour un moteur à combustion interne selon la revendication 1,
**caractérisé en ce que**
chaque palier (18, 22) comprend deux projections (26, 28) s'étendant sur une partie de la périphérie du palier respectif (18, 22), qui font saillie axialement dans le canal (12) au-dessus de la zone (34) proche de l'arbre d'un bord de clapet extérieur (36) du corps de clapet (14).

3. Système de clapet pour un moteur à combustion interne selon la revendication 2,
**caractérisé en ce que**
les deux projections (26, 28) sont décalées de 180° l'une par rapport à l'autre dans la direction circonférentielle.

4. Système de clapet pour un moteur à combustion interne selon l'une des revendications précédentes,
**caractérisé en ce que**
chaque projection (26, 28) s'étend sur 80° à 90°.

5. Système de clapet pour un moteur à combustion interne selon l'une des revendications précédentes,
**caractérisé en ce que**
une surface libre (30, 32) formée entre les projections (26, 28) correspond, par rapport à son extension dans la direction circonférentielle, à l'angle de rotation maximal du corps de clapet (14).

6. Système de clapet pour un moteur à combustion interne selon l'une des revendications précédentes,
**caractérisé en ce que**
le corps de clapet (14), dans sa position fermant le canal (12), est en appui contre une première extrémité (42) de chaque projection (26, 28) orientée dans la direction circonférentielle vers le corps de clapet (14).

7. Système de clapet pour un moteur à combustion interne selon l'une des revendications précédentes,
**caractérisé en ce que**
le corps de clapet (14), dans sa position ouvrant le canal (12), est en appui contre une deuxième extrémité (44) de chaque projection (26, 28) orientée dans la direction circonférentielle du corps de clapet (14).

8. Système de clapet pour un moteur à combustion interne selon l'une des revendications précédentes,
**caractérisé en ce que**
la surface de la deuxième extrémité (44) respective de chaque projection (26, 28) s'étend parallèlement à l'axe central du canal (12) et est disposée dans le sens d'ouverture de manière adaptée à l'épaisseur du clapet et décalée d'une demi-épaisseur de clapet par rapport à l'axe central du canal (12).

9. Système de clapet pour un moteur à combustion interne selon l'une des revendications précédentes,
**caractérisé en ce que**
la surface de la première extrémité (42) de chaque projection (26, 28) s'étend perpendiculairement à l'axe central du canal (12) et est décalée d'une demi-épaisseur de clapet par rapport à l'axe central du canal (12) dans le sens de la fermeture, de manière adaptée à l'épaisseur de clapet.

10. Système de clapet pour un moteur à combustion interne selon l'une des revendications 1 à 5,
**caractérisé en ce que**
le corps de clapet (14), à l'état fermant le canal (12), s'appuie sur des surfaces de butée qui sont formées sur le canal (12), les premières extrémités (42) des projections (26, 28), orientées vers le corps de clapet (14), étant décalées de 1° à 10° dans le sens de la fermeture par rapport au corps de clapet (14) fermant le canal (12).

11. Système de clapet pour un moteur à combustion interne selon l'une des revendications précédentes,
**caractérisé en ce que**
les surfaces libres (30, 32) des paliers (18, 22) dans les points de support (20, 24) se terminent sur une paroi intérieure (38) du canal (12) et les projections (26, 28) font saillie dans le canal (12).
